# EUROPÄISCHE PATENTSCHRIFT

(11) **EP 1 475 259 B1**
(45) Veröffentlichungstag und Bekanntmachung des Hinweises auf die Patenterteilung: **27.06.2007**
(21) Anmeldenummer: 04010442.4
(22) Anmeldetag: 03.05.2004
(51) Int. Cl.: B60H 1/03, B60H 1/00

(54) **Fluid-/Luft-Heizungswärmetauscher für ein Kraftfahrzeug**
Liquid/air heat exchanger for a vehicle heater
Echangeur de chaleur liquide/air pour un chauffage du véhicule

(30) Priorität: 07.05.2003 DE 10320416
(43) Veröffentlichungstag der Anmeldung: 10.11.2004
(73) Patentinhaber: Webasto AG, 82131 Stockdorf (DE)
(72) Erfinder: Korfmann, Steffen, 82166 Gräfelfing (DE); Boltz, Norbert, 85540 Haar (DE); Färber, Frank, 80992 München (DE)

(56) Entgegenhaltungen:
- EP-B- 0 462 154
- EP-B- 0 751 877
- DE-A- 3 914 834
- DE-A- 4 014 501
- GB-A- 927 579

## Beschreibung

Die Erfindung betrifft einen Fluid/Luft-Heizungswärmetauscher für ein Kraftfahrzeug, insbesondere einen zum Einbau in ein Klimagerät eines Kraftfahrzeugs vorgesehenen Fluid/Luft-Heizungswärmetauscher, mit einem Fluideinlass und einem Fluidauslass, die dazu vorgesehen sind, mit einem Heizkreislauf des Kraftfahrzeugs verbunden zu werden, und mit Wärmeübertragungsmitteln zum Übertragen von Wärme von dem Fluid auf einen Luftstrom, wobei der Fluid/Luft-Heizungswärmetauscher einen Brenner zum Erwärmen von Fluid aufweist. Weiterhin betrifft die Erfindung ein Klimagerät, das einen erfindungsgemäßen Fluid/Luft-Heizungswärmetauscher aufweist, und ein System zur Klimatisierung des Innenraums eines Kraftfahrzeugs, das einen erfindungsgemäßen Fluid/Luft-Heizungswärmetauscher und/oder ein erfindungsgemäßes Klimagerät umfasst.

Es ist bekannt, im Fall einer in den Kühlmittelkreislauf des Fahrzeugsmotors eingebundenen Wasserstandheizung und/oder Wasserzusatzheizung den Motor und/oder den Fahrzeuginnenraum vorzuwärmen. Die Vorwärmung des Fahrzeugsinnenraums erfolgt dabei in der Regel über die Heiz- und Klimaanlage. Weiterhin kann mit einer Wasserzusatzheizung auch eine Zuheizung während der Fahrt realisiert werden. Es ist ebenfalls bekannt, die Wasserstandheizung beziehungsweise die Wasserzusatzheizung in den sogenannten kleinen Wasserkreislauf zu integrieren. Dieser kleine Wasserkreislauf besteht üblicherweise aus der Wasserstandheizung beziehungsweise der Wasserzusatzheizung, einer Umwälzpumpe und einem Heizungswärmetauscher. Bei der Wasserstandheizung beziehungsweise der Wasserzusatzheizung handelt es sich in vielen Fällen um eine brennstoffbetriebene Heizung.

So zeigt die DE 39 14 834 A1 einen gattungsgemäßen Wärmetauscher, insbesondere für ein Fahrzeugheizgerät, mit zwei miteinander verbundenen, mit Fluid gefüllten Kammern, mit einem Wärmetauscher, der seine Wärme an ein gasförmiges Wärmeträgermedium abgibt, sowie mit einem Brenner zum Erwärmen des Fluids.

Ein Nachteil dieses bekannten Standes der Technik besteht darin, dass in der Betriebsweise "Vorwärmen" der Stromverbrauch aufgrund einer eingeschalteten elektrischen Umwälzpumpe im Stand des Fahrzeugs relativ hoch ist, weshalb eine Beheizung des Innenraums über eine längere Zeitdauer in vielen Fällen nicht möglich ist. Aufgrund der Tatsache, dass die Wasserstandheizung beziehungsweise die Wasserzusatzheizung sowie die Heiz- und Klimaanlage bei den bekannten Lösungen als getrennte Bauteile vorliegen, ist weiterhin der Installationsaufwand bei der Fahrzeugfertigung vergleichsweise hoch.

Der Erfindung liegt die Aufgabe zugrunde, die gattungsgemäßen Fluid/Luft-Heizungswärmetauscher derart weiterzubilden, dass der Stromverbrauch insbesondere in der Betriebsweise "Vorwärmen" im Stand des Fahrzeugs gesenkt und gleichzeitig der Installationsaufwand bei der Fahrzeugfertigung verringert wird.

Diese Aufgabe wird durch die im Anspruch 1 angegebenen Merkmale gelöst.

Vorteilhafte Weiterbildungen und Ausgestaltungen der Erfindung ergeben sich aus den abhängigen Ansprüchen.

Der erfindungsgemäße Fluid/Luft-Heizungswärmetauscher baut auf dem gattungsgemäßen Stand der Technik dadurch auf, dass es durch die Kombination der Wasserstandheizung beziehungsweise der Wasserzusatzheizung und des Heizungswärmetauschers beziehungsweise der Heiz-/Klimaanlage des Fahrzeugs insbesondere möglich, das Prinzip der natürlichen Konvektion zumindest in der Betriebsweise "Vorwärmen" zur Zirkulation des Kühlmittels zwischen dem Brenner und den Wärmeübertragungsmitteln zu nutzen, wodurch der Stromverbrauch aufgrund einer nicht erforderlichen oder leistungsschwachen Umwälzpumpe deutlich reduziert werden kann. Weiterhin wird durch die Integration der Wasserstandheizung beziehungsweise der Wasserzusatzheizung und dem Heizungswärmetauscher beziehungsweise der Heiz-/Klimaanlage der Installationsaufwand bei der Fahrzeugfertigung deutlich verringert.

Bei erfindungsgemäßen Fluid/Luft-Heizungswärmetauschers ist vorgesehen, dass der Brenner einen Brenngas/Fluidwärmetauscher umfasst. Der Brenngas/Fluidwärmetauscher kann dabei zur Vergrößerung der aktiven Oberfläche beispielsweise rippenartig ausgestaltet sein.

Bei der Erfindung ist vorgesehen, dass der Fluid/Luft-Heizungswärmetauscher einen bezogen auf die Fluidströmungsrichtung zwischen dem Fluideinlass und den Wärmeübertragungsmitteln angeordneten ersten Fluidbehälter aufweist, und dass zumindest der Brenngas/Fluidwärmetauscher in dem ersten Fluidbehälter angeordnet ist. Dabei kann in an sich bekannter Weise vorgesehen sein, dass der Brenngas/Fluidwärmetauscher ein dem Brenner zugeordnetes Brennerrohr umgibt.

In diesem Zusammenhang ist erfindungsgemäß vorgesehen, dass der Fluid/Luft-Heizungswärmetauscher einen bezogen auf die Fluidströmungsrichtung zwischen den Wärmeübertragungsmitteln und dem Fluidauslass angeordneten zweiten Fluidbehälter und eine Verbindungsleitung aufweist, die den ersten Fluidbehälter und den zweiten Fluidbehälter verbindet. In diesem Zusammenhang ist es beispielsweise möglich, dass die Wärmeübertragungsmittel durch ein Flachrohr- beziehungsweise Lamellenpaket gebildet sind, das zwischen dem ersten Fluidbehälter und zweiten Fluidbehälter angeordnet ist.

Im vorstehend erläuterten Zusammenhang ist vorzugsweise weiterhin vorgesehen, dass die Verbindungsleitung zumindest in einer ersten Betriebsweise dazu vorgesehen ist, Fluid von dem zweiten Fluidbehälter zu dem ersten Fluidbehälter zurückzuführen. Dadurch ist es insbesondere möglich, durch die Anwendung des Prinzips der natürlichen Konvektion den folgenden Fluidkreislauf zu bilden: Das Fluid strömt von dem ersten Fluidbehälter durch die Wärmeübertragungsmittel zu dem zweiten Fluidbehälter und von diesem über die Verbindungsleitung zurück zu dem ersten Fluidbehälter. Gegebenenfalls kann die Zirkulation des Fluids durch eine Umwälzpumpe unterstützt werden, die jedoch in jedem Fall mit geringerer Leistung als bei bekannten Lösungen ausgelegt werden kann.

Im vorstehend erläuterten Zusammenhang kann insbesondere vorgesehen sein, dass die erste Betriebsweise einen Standheizbetrieb umfasst.

Eine besonders bevorzugte Weiterbildung der Erfindung sieht vor, dass in der Verbindungsleitung Mittel vorgesehen sind, welche die Fluidströmung durch die Verbindungsleitung beeinflussen.

Dabei kann insbesondere vorgesehen sein, dass die Mittel dazu ausgelegt sind, eine Fluidströmung von dem ersten Fluidbehälter zu dem zweiten Fluidbehälter zumindest in einer zweiten Betriebsweise zu verhindern oder zumindest zu begrenzen. Sofern die Mittel bei weiteren Betriebsweisen keine zusätzliche Funktion erfüllen müssen, können sie beispielsweise durch ein herkömmliches Rückschlagventil gebildet sein.

Im vorstehend erläuterten Zusammenhang kann insbesondere vorgesehen sein, dass die zweite Betriebsweise einen Zusatzheizbetrieb umfasst.

Weiterhin kann vorgesehen sein, dass die zweite Betriebsweise einen Standardheizbetrieb umfasst. Unter Standardheizbetrieb ist in diesem Zusammenhang der Heizbetrieb zu verstehen, bei dem die Heizleistung ausschließlich vom Antriebsmotor des Kraftfahrzeugs zur Verfügung gestellt wird.

Bei einer besonders bevorzugten Ausführungsform des erfindungsgemäßen Fluid/Luft-Heizungswärmetauschers ist vorgesehen, dass die Mittel dazu ausgelegt sind, zumindest in einer dritten Betriebsweise eine Fluidströmung von dem ersten Fluidbehälter zu dem zweiten Fluidbehälter hervorzurufen. Zu diesem Zweck sind die Mittel dazu ausgelegt, die Funktion einer Umwälzpumpe zu erfüllen. Dabei kommen alternativ auch Ausführungsformen in Betracht, bei denen die Umwälzpumpe separat vom Fluid/Luft-Heizungswärmetauscher vorgesehen ist.

Im vorstehend erläuterten Zusammenhang kann insbesondere vorgesehen sein, dass die dritte Betriebsweise einen Motorvorwärmbetrieb umfasst. Die Vorwärmung des Motors kann dabei wahlweise mit aus den Wärmeübertragungsmitteln austretendem Fluid erfolgen, um die in diesem gespeicherte Restwärme zu nutzen. Zusätzlich oder alternativ ist es möglich, erwärmtes Fluid aus dem ersten Fluidbehälter über die Verbindungsleitung zu dem zweiten Fluidbehälter und von diesem zum Antriebsmotor zu führen.

Bei einer bevorzugten Weiterbildung der Erfindung ist vorgesehen, dass die Mittel in der zweiten Betriebsweise die Funktion eines Rückschlagventils und in der dritten Betriebsweise die Funktion einer Pumpe erfüllen.

Für alle Ausführungsformen der Erfindung wird bevorzugt, dass das Fluid durch Kühlwasser gebildet ist.

Jedes Klimagerät, das einen erfindungsgemäßen Fluid/Luft-Heizungswärmetauscher aufweist, fällt in den Schutzbereich der zugehörigen Ansprüche. Unter dem Begriff "Klimagerät" ist in diesem Zusammenhang insbesondere eine sogenannte HVAC-Einheit zu verstehen (HVAC = Heating Ventilation Air Conditioning).

Im Zusammenhang mit derartigen Klimageräten kann in vorteilhafter Weise weiterhin vorgesehen sein, dass das Klimagerät weiterhin eine oder mehrere der folgenden Einrichtungen aufweist: einen weiteren Wärmetauscher, der mit einem Kältekreislauf in Verbindung steht, eine Gebläseeinrichtung, eine Luftleiteinrichtung, eine Sensoreinrichtung.

Jedes System zur Klimatisierung des Innenraums eines Kraftfahrzeugs, das einen erfindungsgemäßen Fluid/Luft-Heizungswärmetauscher und/oder ein erfindungsgemäßes Klimagerät umfasst, fällt in den Schutzbereich der zugehörigen Ansprüche.

In diesem Zusammenhang kann insbesondere vorgesehen sein, dass das System weiterhin eine Steuer- und/oder Regelungseinrichtung umfasst, die den Brenner steuert und/oder regelt.

Dabei ist vorzugsweise weiterhin vorgesehen, dass die Steuer- und/oder Regelungseinrichtung weitere und vorzugsweise alle steuer- und/oder regelbaren Komponenten des Systems steuert beziehungsweise regelt.

Ein Grundgedanke der Erfindung liegt darin, den Stromverbrauch insbesondere während der Standheizungsfunktion aufgrund des Wegfalls beziehungsweise der Verwendung einer vergleichsweise kleineren Umwälzpumpe für den Wasserkreislauf deutlich zu reduzieren. Zudem kann die Stand- beziehungsweise Zusatzheizung bereits mit der Heiz-/Klimaanlage vormontiert werden. Weiterhin wird bei bevorzugten Ausführungsformen durch die Integration der Wasserstandheizung beziehungsweise der Wasserzusatzheizung und der Heiz-/Klimaanlage in der Regel nur noch ein Steuergerät benötigt.

Bevorzugte Ausführungsformen der Erfindung werden nachfolgend anhand der Zeichnungen beispielhaft erläutert.

Es zeigen:
- Figur 1: eine schematische Darstellung einer bevorzugten Ausführungsform des erfindungsgemäßen Fluid/Luft-Heizungswärmetauschers;
- Figur 2: eine schematische Darstellung einer Ausführungsform des erfindungsgemäßen Klimagerätes; und
- Figur 3: eine schematische Darstellung einer Ausführungsform des erfindungsgemäßen Systems.

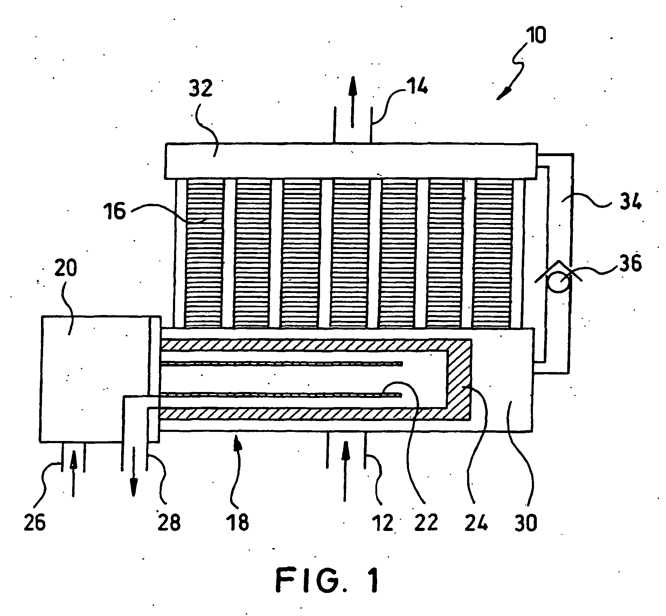

Figur 1 veranschaulicht eine bevorzugte Ausführungsform eines erfindungsgemäßen Fluid/Luft-Heizungswärmetauschers 10. Der dargestellte Fluid/Luft-Heizungswärmetauscher 10 umfasst einen unten angeordneten ersten Fluidbehälter 30, der mit einem Fluideinlass 12 in Verbindung steht. Weiterhin ist ein oben angeordneter zweiter Fluidbehälter 32 vorgesehen, der mit einem Fluidauslass 14 in Verbindung steht. Der Fluideinlass 12 und der Fluidauslass 14 sind dazu vorgesehen, mit einem in Figur nicht dargestellten Heizkreislauf des Kraftfahrzeugs verbunden zu werden. Zwischen dem ersten Fluidbehälter 30 und dem zweiten Fluidbehälter 32 sind Wärmeübertragungsmittel 16 vorgesehen, die in Form eines Flachrohr/Lamellenpaketes ausgebildet sind, durch das Fluid von dem ersten Fluidbehälter 30 in den zweiten Fluidbehälter 32 strömen kann. Die Wärmeübertragungsmittel 16 übertragen Wärme von dem sie durchströmenden Fluid auf einen Luftstrom, der von einem nicht dargestellten Gebläse erzeugt und ebenfalls durch die Wärmeübertragungsmittel 16 geführt wird. In dem ersten Fluidbehälter 30 ist ein Brenngas/Fluidwärmetauscher 24 angeordnet, der Bestandteil eines insgesamt mit 18 bezeichneten Brenners ist. Innerhalb des Brenngas/Fluidwärmetauschers 24 ist ein Brennerrohr 22 vorgesehen, das in an sich bekannter Weise mit einem Brennerkopf 20 in Verbindung steht beziehungsweise in diesen eingeschoben ist. Das Brennerrohr 22 kann insbesondere ein längeres Brennerrohr 22 sein, als es beim Stand der Technik üblicherweise verwendet wird. Der Anschluss des Brennerkopfes 20 und die Anordnung dieses Bauteils ist dabei vorzugsweise so gestaltet, dass ein Brennlufteintritt 26 und ein Abgasaustritt 28 außerhalb der Fahrzeugkabine liegen.

Zwischen dem ersten Fluidbehälter 30 und dem zweiten Fluidbehälter 32 ist eine Verbindungsleitung 34 vorgesehen, in der Mittel 36 angeordnet sind, die dazu geeignet sind, eine Fluidströmung durch die Verbindungsleitung 34 zu beeinflussen.

Nachfolgend wird eine erste Betriebsweise des erfindungsgemäßen Fluid/Luft-Heizungswärmetauschers 10 erläutert, die insbesondere den Standheizbetrieb umfasst. Bei dieser Betriebsweise wird in dem ersten Fluidbehälter 30 enthaltenes Fluid, beispielsweise Kühlwasser, durch den Betrieb des Brenners 18 erwärmt. Das erwärmte Fluid durchströmt aufgrund des Prinzips der natürlichen Konvektion die Wärmeübertragungsmittel 16 und gibt über diese Wärme auf einen die Wärmeübertragungsmittel 16 ebenfalls durchströmten Luftstrom ab. Anschließend sammelt sich das Fluid in dem zweiten Fluidbehälter 32 und strömt von dort über die Verbindungsleitung 34 zu dem ersten Fluidbehälter 30 zurück. Für diese Betriebsweise sind keine die Fluidströmung in der Verbindungsleitung 34 beeinflussenden Mittel 36 erforderlich. Ein derartiger Standheizbetrieb senkt den die Fahrzeugbatterie belastenden Stromverbrauch deutlich, weshalb längere Standheizzeiten ermöglicht werden.

Nachfolgend wird eine mit dem erfindungsgemäßen Fluid/Luft-Heizungswärmetauscher ebenfalls mögliche zweite Betriebsweise erläutert, die insbesondere einen Zusatzheizbetrieb umfasst. Bei dieser Betriebsweise strömt von einer Kühlwasserpumpe des Kraftfahrzeugs umgewälztes Kühlwasser über den Fluideinlass 12 in den ersten Behälter 30 ein. Durch den aktiven Brenner 18 wird das in dem ersten Behälter 30 enthaltene Fluid beziehungsweise Kühlwasser weiter erwärmt. Anschließend strömt das erwärmte Fluid, wie bei der ersten Betriebsweise, durch die Wärmeübertragungsmittel 16 in den zweiten Fluidbehälter 32, tritt dann aber aus diesem über den Fluidauslass 14 aus. Dabei verhindern in der Verbindungsleitung 34 vorgesehene Mittel 36, die die Funktion eines schematisch angedeuteten Rückschlagventils erfüllen, dass das von der Kühlwasserpumpe umgewälzte Kühlwasser unter Umgehung der Wärmeübertragungsmittel 16 von dem ersten Fluidbehälter 30 durch die Verbindungsleitung 34 in den zweiten Fluidbehälter 32 strömt.

Die zweite Betriebsweise kann auch einen Standardheizbetrieb umfassen, in dem die Strömungsverhältnisse wie vorstehend erläutert sind, der Brenner 18 jedoch nicht aktiv ist.

Nachfolgend wird eine mit dem erfindungsgemäßen Fluid/Luft-Heizungswärmetauscher mögliche dritte Betriebsweise erläutert, die insbesondere einen Motorvorwärmbetrieb umfasst. Bei dieser Betriebsweise strömt durch eine elektrische Umwälzpumpe umgewälztes Kühlwasser durch den Fluideinlass 12 in den ersten Behälter 30 und wird dort durch den aktiven Brenner 18 erwärmt. Obwohl die elektrische Umwälzpumpe grundsätzlich auch separat von dem Fluid/Luft-Heizungswärmetauscher ausgebildet sein kann, sieht eine besonders bevorzugte Ausführungsform der Erfindung vor, dass die in der Verbindungsleitung 34 vorgesehenen Mittel 36 bei dieser Betriebsweise eine Pumpenfunktion übernehmen, die eine Fluidströmung von dem ersten Fluidbehälter 30 zu dem zweiten Fluidbehälter 32 durch die Verbindungsleitung 34 hervorrufen. Durch die Verbindungsleitung 34 in den zweiten Fluidbehälter 32 strömendes erwärmtes Fluid beziehungsweise Kühlwasser tritt über den Fluidauslass 14 aus dem zweiten Fluidbehälter 32 aus und strömt durch den in Figur 1 nicht dargestellten zu erwärmenden Antriebsmotor. Die dritte Betriebsweise kann entweder vorsehen, dass kein Fluid durch die Wärmeübertragungsmittel 16 strömt, so dass die gesamte Wärme zur Vorwärmung des Antriebsmotors genutzt werden kann, oder dass zumindest ein Teil des in dem ersten Fluidbehälter 30 erwärmten Fluids durch die Wärmeübertragungsmittel 16 geleitet wird, um gleichzeitig eine Beheizung des Fahrzeuginnenraums zu ermöglichen. Insbesondere wenn die elektrische Umwälzpumpe separat von dem Fluid/Luft-Heizungswärmetauscher vorliegt, kommen auch Ausführungsformen in Betracht, bei denen die Mittel 36 durch das dargestellte Rückschlagventil gebildet sind, so dass das gesamte in dem ersten Fluidbehälter 30 erwärmte Fluid durch die Wärmeübertragungsmittel 16 strömt und über den Fluidauslass 14 aus dem zweiten Fluidbehälter 32 austritt. In diesem Fall wird lediglich die am Fluidauslass 14 noch zur Verfügung stehende Restwärme zur Vorwärmung des Antriebsmotors genutzt.

Sofern nur ein geringer Energiebedarf für den Fahrzeuginnenraum besteht, kann beim Vorheizen Überschussenergie in den Motorkreislauf abgeführt werden, um häufige Startzyklen des Brenners 18 mit entsprechendem Stromverbrauch zu vermeiden.

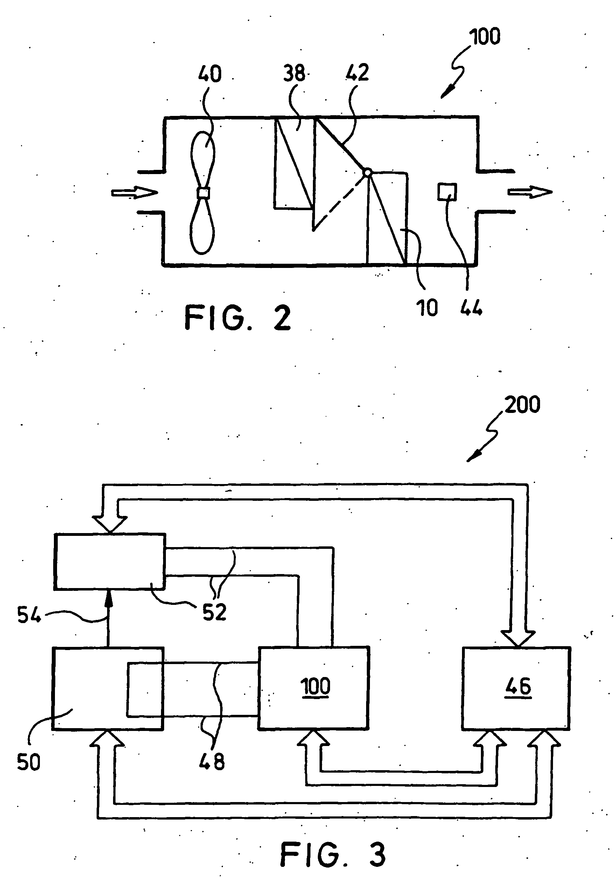

Figur 2 zeigt eine schematische Darstellung einer Ausführungsform des erfindungsgemäßen Klimagerätes. Das insgesamt mit 100 bezeichnete Klimagerät umfasst ein Gebläse 40, das einen durch die Pfeile veranschaulichten Luftstrom erzeugt. In dem Klimagerät 100 ist ein erfindungsgemäßer Fluid/Luft-Heizungswärmetauscher 10 angeordnet. Ein weiterer Wärmetauscher 38 ist Bestandteil eines in Figur 2 nicht näher dargestellten Kältekreislaufs. Weiterhin umfasst das in Figur 2 dargestellte Klimagerät 100 eine nur schematisch angedeutete Luftleiteinrichtung 42, mit der der von dem Gebläse 40 erzeugte Luftstrom je nach Betriebsweise geeignet umgelenkt werden kann. Weiterhin ist eine Sensoreinrichtung 44 schematisch angedeutet. Da das gesamte in Figur 2 dargestellte Klimagerät 100 komplett vorgefertigt werden kann, wird der Montageaufwand bei der Fahrzeugfertigung im Vergleich zu Lösungen deutlich reduziert, bei denen das Klimagerät und die Stand- beziehungsweise Zusatzheizung separat ausgebildet sind.

Figur 3 zeigt eine schematische Darstellung einer Ausführungsform des erfindungsgemäßen Systems. Das dargestellte System umfasst einen Heizkreislauf 48, in dem von einem Antriebsmotor 50 erwärmtes Fluid beziehungsweise Kühlwasser zirkuliert. In den Heizkreislauf 48 ist ein erfindungsgemäßer in Figur 3 nicht dargestellter Fluid/Luft-Heizungswärmetauscher eingebunden, der in dem anhand von Figur 2 erläuterten Klimagerät 100 vorgesehen ist. Weiterhin ist ein in Figur 3 ebenfalls nicht dargestellter in dem anhand von Figur 2 erläuterten Klimagerät 100 angeordneter weiterer Wärmetauscher in einen Kältekreislauf 52 eingebunden. Der Kältekreislauf 52 kann insbesondere einen Kompressor umfassen, der über einen Antrieb 54 von dem Antriebsmotor 50 angetrieben wird. Eine Steuer- beziehungsweise Regelungsvorrichtung 46 steuert beziehungsweise regelt das gesamte dargestellte System und steht zu diesem Zweck über die dargestellten Pfeile mit allen Komponenten des Systems in Verbindung. Obwohl es prinzipiell auch möglich ist, den Brenner des erfindungsgemäßen Fluid/Luft-Heizungswärmetauschers separat zu steuern beziehungsweise zu regeln, wird es besonders bevorzugt, dass die Steuerungs- beziehungsweise Regelungsvorrichtung 46 auch den nur in Figur 1 dargestellten Brenner 18 steuert beziehungsweise regelt.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

### Bezugszeichenliste

- 10: Fluid/Luft-Heizungswärmetauscher
- 12: Fluideinlass
- 14: Fluidauslass
- 16: Wärmeübertragungsmittel
- 18: Brenner
- 20: Brennerkopf
- 22: Brennerrohr
- 24: Brenngas/Fluidwärmetauscher
- 26: Brennlufteintritt
- 28: Abgasaustritt
- 30: erster Fluidbehälter
- 32: zweiter Fluidbehälter
- 34: Verbindungsleitung
- 36: Strömungsbeeinflussungsmittel
- 38: Wärmetauscher
- 40: Gebläseeinrichtung
- 42: Luftleiteinrichtung
- 44: Sensoreinrichtung
- 46: Steuerungs-/Regelungsvorrichtung
- 48: Heizkreislauf
- 50: Antriebsmotor
- 52: Kältekreislauf
- 54: Antrieb
- 100: Klimagerät
- 200: System

## Patentansprüche

1. Fluid/Luft-Heizungswärmetauscher (10) für ein Kraftfahrzeug, insbesondere zum Einbau in ein Klimagerät (100) eines Kraftfahrzeugs vorgesehener Fluid/Luft-Heizungswärmetauscher (10), mit einem Fluideinlass (12) und einem Fluidauslass (14), die dazu vorgesehen sind, mit einem Heizkreislauf (48) des Kraftfahrzeugs verbunden zu werden, und mit Wärmeübertragungsmitteln (16) zum Übertragen von Wärme von dem Fluid auf einen Luftstrom, wobei der Fluid/Luft-Heizungswärmetauscher (10) einen Brenner (18) zum Erwärmen von Fluid aufweist, wobei der Fluid/Luft-Heizungswärmetauscher (10) dazu ausgelegt ist, zumindest in einer ersten Betriebsweise das Prinzip der natürlichen Konvektion zur Zirkulation des Fluids zwischen dem Brenner (18) und den Wärmeübertragungsmitteln (16) zu nutzen, wobei der Brenner (18) einen Brenngas/Fluidwärmetauscher (24) umfasst, wobei der Fluid/Luft-Heizungswärmetauscher (10) einen bezogen auf die Fluidströmungsrichtung zwischen dem Fluideinlass (12) und den Wärmeübertragungsmitteln (16) angeordneten ersten Fluidbehälter (30) aufweist, und wobei zumindest der Brenngas/Fluidwärmetauscher (16) in dem ersten Fluidbehälter (30) angeordnet ist, **dadurch gekennzeichnet, dass** der Fluid/Luft-Heizungswärmetauscher (10) einen bezogen auf die Fluidströmungsrichtung zwischen den Wärmeübertragungsmitteln (16) und dem Fluidauslass (14) angeordneten zweiten Fluidbehälter (32) und eine Verbindungsleitung (34) aufweist, die den ersten Fluidbehälter (30) und den zweiten Fluidbehälter (32) verbindet.

2. Fluid/Luft-Heizungswärmetauscher nach Anspruch 1, **dadurch gekennzeichnet, dass** die Verbindungsleitung (34) zumindest in einer ersten Betriebsweise dazu vorgesehen ist, Fluid von dem zweiten Fluidbehälter (32) zu dem ersten Fluidbehälter (30) zurückzuführen.

3. Fluid/Luft-Heizungswärmetauscher nach Anspruch 2, **dadurch gekennzeichnet, dass** die erste Betriebsweise einen Standheizbetrieb umfasst.

4. Fluid/Luft-Heizungswärmetauscher nach einem der Ansprüche 1 bis 3, **dadurch gekennzeichnet, dass** in der Verbindungsleitung (34) Mittel (36) vorgesehen sind, welche die Fluidströmung durch die Verbindungsleitung (34) beeinflussen.

5. Fluld/Luft-Heizungswärmetauscher nach Anspruch 4, **dadurch gekennzeichnet, dass** die Mittel (36) dazu ausgelegt sind, eine Fluidströmung von dem ersten Fluidbehälter (30) zu dem zweiten Fluidbehälter (32) zumindest in einer zweiten Betriebsweise zu verhindern oder zumindest zu begrenzen.

6. Fluid/Luft-Heizungswärmetauscher nach Anspruch 5, **dadurch gekennzeichnet, dass** die zweite Betriebsweise einen Zusatzheizbetrieb umfasst.

7. Fluid/Luft-Heizungswärmetauscher nach Anspruch 5 oder 6, **dadurch gekennzeichnet, dass** die zweite Betriebsweise einen Standardheizbetrieb umfasst.

8. Fluid/Luft-Heizungswärmetauscher nach einem der Ansprüche 4 bis 7, **dadurch gekennzeichnet, dass** die Mittel (36) dazu ausgelegt sind, zumindest in einer dritten Betriebsweise eine Fluidströmung von dem ersten Fluidbehälter (30) zu dem zweiten Fluidbehälter (32) hervorzurufen.

9. Fluid/Luft-Heizungswärmetauscher nach Anspruch 8, **dadurch gekennzeichnet, dass** die dritte Betriebsweise einen Motorvorwärmbetrieb umfasst.

10. Fluid/Luft-Heizungswärmetauscher nach einem der Ansprüche 4 bis 9. **dadurch gekennzeichnet, dass** die Mittel (36) in der zweiten Betriebsweise die Funktion eines Rückschlagventils und in der dritten Betriebsweise die Funktion einer Pumpe erfüllen.

11. Fluid/Luft-Heizungswärmetauscher nach einem der Ansprüche 1 bis 10, **dadurch gekennzeichnet, dass** das Fluid durch Kühlwasser gebildet ist.

12. Klimagerät (100), das einen Fluid/Luft-Heizungswärmetauscher (10) nach einem der vorhergehenden Ansprüche aufweist.

13. Klimagerät nach Anspruch 12, **dadurch gekennzeichnet, dass** das Klimagerät weiterhin eine oder mehrere der folgenden Einrichtungen aufweist: einen weiteren Wärmetauscher (38), der mit einem Kältekreislauf (52) in Verbindung steht, eine Gebläseeinrichtung (40), eine Luftleiteinrichtung (42), eine Sensoreinrichtung (44).

14. System (200) zur Klimatisierung des Innenraums eines Kraftfahrzeugs, das einen Fluid/Luft-Heizungswärmetauscher (10) nach einem der Ansprüche 1 bis 11 und/oder ein Klimagerät (100) nach Anspruch 12 oder 13 umfasst.

15. System nach Anspruch 14, **dadurch gekennzeichnet, dass** es weiterhin eine Steuer- und/oder Regelungseinrichtung (46) umfasst, die den Brenner (18) steuert und/oder regelt.

16. System nach Anspruch 15, **dadurch gekennzeichnet, dass** die Steuer- und/oder Regelungseinrichtung weitere und vorzugsweise alle steuer- und/oder regelbaren Komponenten des Systems steuert beziehungsweise regelt.

## Claims

1. Liquid/air heating heat exchanger (10) for a motor vehicle, in particular in a liquid/air heating heat exchanger (10) provided for installation in an air-conditioning device (100) of a motor vehicle, having a liquid inlet (12) and a liquid outlet (14), which are provided to be connected to a heating circuit (48) of the motor vehicle, and having heat transfer means (16) for transferring heat from the liquid to an air stream, the liquid/air heating heat exchanger (10) having a burner (18) for heating liquid, the liquid/air heating heat exchanger (10) being designed to use the principle of natural convention for the circulation of the liquid between the burner (18) and the heat transfer means (16), at least in a first operating mode, the burner (18) comprising a combustion gas/liquid heat exchanger (24), the liquid/air heating heat exchanger (10) having a first liquid container (30) arranged between the liquid inlet (12) and the heat transfer means (16) in relation to the liquid flow direction, and at least the combustion gas/liquid heat exchanger (16) being arranged in the first liquid container (30), **characterized in that** the liquid/air heating heat exchanger (10) has a second liquid container (32) arranged between the heat transfer means (16) and the liquid outlet (14) in relation to the liquid flow direction, and a connecting line (34) which connects the first liquid container (30) and the second liquid container (32).

2. Liquid/air heating heat exchanger according to Claim 1, **characterized in that** the connecting line (34) is provided to feed liquid back from the second liquid container (32) to the first liquid container (30), at least in a first operating mode.

3. Liquid/air heating heat exchanger according to Claim 2, **characterized in that** the first operating mode comprises standby heating operation.

4. Liquid/air heating heat exchanger according to one of Claims 1 to 3, **characterized in that** means (36) are provided in the connecting line (34) which influence the liquid flow through the connecting line (34).

5. Liquid/air heating heat exchanger according to Claim 4, **characterized in that** the means (36) are designed to prevent or at least to limit a liquid flow from the first liquid container (30) to the second liquid container (32), at least in a second operating mode.

6. Liquid/air heating heat exchanger according to Claim 5, **characterized in that** the second operating mode comprises additional heating operation.

7. Liquid/air heating heat exchanger according to Claim 5 or 6, **characterized in that** the second operating mode comprises standard heating operation.

8. Liquid/air heating heat exchanger according to one of Claims 4 to 7, **characterized in that** the means (36) are designed to bring about a liquid flow from the first liquid container (30) to the second liquid container (32), at least in a third operating mode.

9. Liquid/air heating heat exchanger according to Claim 8, **characterized in that** the third operating mode comprises engine preheating operation.

10. Liquid/air heating heat exchanger according to one of Claims 4 to 9, **characterized in that** the means (36) fulfil the function of a non-return valve in the second operating mode and the function of a pump in the third operating mode.

11. Liquid/air heating heat exchanger according to one of Claims 1 to 10, **characterized in that** the liquid is formed by cooling water.

12. Air-conditioning device (100) which has a liquid/air heating heat exchanger (10) according to one of the preceding claims.

13. Air conditioning device according to Claim 12, **characterized in that** the air-conditioning device also has one or more of the following devices: a further heat exchanger (38) which is connected to a coolant circuit (52), a blower device (40), an air guiding device (42), a sensor device (44).

14. System (200) for air-conditioning the interior of a motor vehicle, which comprises a liquid/air heating heat exchanger (10) according to one of Claims 1 to 11 and/or an air conditioning device (100) according to Claim 12 or 13.

15. System according to Claim 14, **characterized in that** it also comprises a controlling and/or regulating device (46) which controls and/or regulates the burner (18).

16. System according to Claim 15, **characterized in that** the controlling and/or regulating device controls or regulates further components and preferably all the components of the system that can be controlled and/or regulated.

## Revendications

1. Echangeur de chaleur de chauffage liquide/air (10), pour un véhicule automobile, en particulier échangeur de chaleur de chauffage liquide/air (10) prévu pour un montage dans un appareil de climatisation (100) d'un véhicule automobile, avec une admission de fluide (12) et une évacuation de fluide (14) prévues pour être reliées à un circuit de chauffage (48) du véhicule automobile, et avec des moyens de transfert de chaleur (16) pour transférer de la chaleur du fluide à un écoulement d'air, l'échangeur de chaleur de chauffage liquide/air (10) présentant un brûleur (18) pour le chauffage de fluide, l'échangeur de chaleur de chauffage liquide/air (10) étant conçu pour, au moins dans un premier mode de fonctionnement, utiliser les principes de la convexion naturelle pour produire la circulation du fluide entre le brûleur (18), et les moyens de transfert de chaleur (16), le brûleur (18) comprenant un échangeur de chaleur gaz de combustion/liquide (24), l'échangeur de chaleur de chauffage liquide/air (10) présentant un premier récipient à fluide (30) disposé entre l'admission de liquide (12) et les moyens de transfert de chaleur (16) en se référant au sens d'écoulement de fluide, et au moins l'échangeur de chaleur gaz de combustion/liquide (16) étant disposé dans le premier récipient à fluide (30), **caractérisé en ce que** l'échangeur de chaleur de chauffage liquide/air (10) relie un deuxième récipient à fluide (32), disposé entre les moyens de transfert de chaleur (16) et l'évacuation de liquide (14) en se référant au sens d'écoulement de liquide, et présente une conduite de liaison (34) reliant le premier récipient à fluide (30) et le deuxième récipient à fluide (32).

2. Echangeur de chaleur de chauffage liquide/air selon la revendication 1, **caractérisé en ce que** la conduite de liaison (34) est prévue, au moins dans un premier mode de fonctionnement, pour retourner du fluide, du deuxième récipient à fluide (32) au premier récipient à fluide (30).

3. Echangeur de chaleur de chauffage liquide/air selon la revendication 2, **caractérisé en ce que** le premier mode de fonctionnement comprend un fonctionnement en chauffage auxiliaire.

4. Echangeur de chaleur de chauffage liquide/air selon l'une des revendications 1 à 3, **caractérisé en ce que** dans la conduite de liaison (34) sont prévus des moyens (36) influant sur l'écoulement de fluide à travers la conduite de liaison (34).

5. Echangeur de chaleur de chauffage liquide/air selon la revendication 4, **caractérisé en ce que** les moyens (36) sont conçus pour empêcher ou au moins limiter un écoulement de fluide du premier récipient à fluide (30) au deuxième récipient à fluide (32), au moins en un deuxième mode de fonctionnement.

6. Echangeur de chaleur de chauffage liquide/air selon la revendication 5, **caractérisé en ce que** le deuxième mode de fonctionnement comprend un fonctionnement en chauffage d'appoint.

7. Echangeur de chaleur de chauffage liquide/air selon la revendication 5 ou 6, **caractérisé en ce que** le deuxième mode de fonctionnement comprend un fonctionnement en chauffage standard.

8. Echangeur de chaleur de chauffage liquide/air selon l'une des revendications 4 à 7, **caractérisé en ce que** les moyens (36) sont conçus pour provoquer au moins en un troisième mode de fonctionnement un écoulement de fluide du premier récipient à fluide (30) vers le deuxième récipient à fluide (32).

9. Echangeur de chaleur de chauffage liquide/air selon la revendication 8, **caractérisé en ce que** le troisième mode de fonctionnement comprend un fonctionnement en préchauffage du moteur.

10. Echangeur de chaleur de chauffage liquide/air selon l'une des revendications 4 à 9, **caractérisé en ce que** les moyens (36), dans le deuxième mode de fonctionnement, satisfont à la fonction d'un clapet anti-retour et, dans le troisième mode de fonctionnement, satisfont à la fonction d'une pompe.

11. Echangeur de chaleur de chauffage liquide/air selon l'une des revendications 1 à 10, **caractérisé en ce que** le fluide est formé par de l'eau de refroidissement.

12. Appareil de climatisation (100), présentant un échangeur de chaleur de chauffage liquide/air (10) selon l'une des revendications précédentes.

13. Appareil de climatisation selon la revendication 12, **caractérisé en ce que** l'appareil de climatisation présente en outre un ou plusieurs des équipements suivants : un autre échangeur de chaleur (38), relié à un circuit de froid (52), un dispositif à soufflante (40), un dispositif de guidage de l'air (42), un dispositif à capteur (44).

14. Système (200) pour la climatisation de l'habitacle d'un véhicule automobile, comprenant un échangeur de chaleur de chauffage liquide/air (10) selon l'une des revendications 1 à 11 et/ou un appareil de climatisation (100) selon la revendication 12 ou 13.

15. Système selon la revendication 14, **caractérisé en ce qu'**il comprend en outre un dispositif de commande et/ou de régulation (46), commandant et/ou régulant le brûleur (18).

16. Système selon la revendication 15, **caractérisé en ce que** le dispositif de commande et/ou de régulation commande ou régule d'autres, et de préférence tous les composants de commande et/ou réglables du système.
